# EUROPEAN PATENT APPLICATION

(11) **EP 1 946 878 A1**
(43) Date of publication of application: **23.07.2008**
(21) Application number: 07001093.9
(22) Date of filing: 19.01.2007
(51) Int. Cl.: B23K 26/24, B23K 35/38

(54) **Protective gas for laser welding and method for laser welding**

(71) Applicant: Air Liquide Deutschland GmbH, 40235 Düsseldorf (DE)
(72) Inventor: Kaya, Cerkez, 47804 Krefeld (DE)
(74) Representative: Kahlhöfer, Hermann

(57) **Abstract**

Subject matter of the present invention is a protective gas for laser welding comprising at least the following components:
- 85 to 98 % of at least one inert gas and
- 2 to 15 % oxygen (O₂).

Furthermore a laser-welding method using a protective gas according to the present invention is described. The protective gas according to the present invention improves advantageously the transfer of energy into the welded region (3) so that small flank angles (6) can be achieved. The drawback of laser welding using at least one laser diode as energy source resulting in comparably small welding powers can such be overcome by using a protective gas according to the present invention.

## Description

The present invention relates to a protective gas for laser welding and a method for laser welding a workpiece made of metal. In particular the invention is directed to a protective gas comprising oxygen and a respective method for laser welding.

Laser welding is a common technique for welding workpieces made of metal, in particular workpieces made of steel. Recently laser diodes have been found useful as a source for laser beams for laser welding. In comparison to well-known laser sources like Nd:YAG- and CO₂-lasers, laser diodes have a lower intensity in the focus of the laser beam which results in a broad melting region having small depths of the welding seam, in particular when welding steels, so that it is often not possible to weld-through the workpieces.

Based on this it is an object of the present invention solve at least in part the problems of prior art and in particular to provide a method for laser welding workpieces wherein the workpieces can be welded through even if laser diodes are used as a source for the laser beams and to provide a respective protective gas which allows such a welding process.

These objects are accomplished by a protective gas and a method for laser welding having the features of the independent claims. The respective dependent claims are directed to advantageous improvements of the method or the protective gas.

The protective gas according to the method for laser welding comprises the following components:
- 85 to 98% of an inert gas and
- 2 to 15% oxygen (O₂),
wherein the fractions of the inert gas and oxygen sum up to at least 99.9%, preferably up to at least 99.99% the remainder being impurities.

The portions or fractions given within this document in percent are - unless otherwise disclosed - volume percent at a pressure of 1 bar and a temperature of 20°C with a tolerance of 0.1 %. All the gas mixtures disclosed herein can comprise up to 0.1 % of impurities, preferably less than 0.01 % impurities. At least one inert gas comprises preferably nitrogen and optionally at least one further inert gas such as argon and/or helium. The addition of oxygen to the inert gas results in an effective heat distribution in the melt so that a heat conduction welding process resulting in a width-to-depth-ratio of the welding seam of less than one (1) can be achieved.

According to a preferred embodiment the protective gas comprises the following components:
- 91% to 93% of at least one inert gas and
- 7% to 9% oxygen (O₂),
the sum of these fractions adding up to more than 99.9%, preferably more than 99.99%, the remainder being impurities.

During experiments performed by the applicant in particular a protective gas comprising 92% nitrogen and 8% oxygen has been found to be advantageous. Another very advantageous protective gas was found to comprise 92 % of <argon and 8% oxygen. During the experiments performed by the applicant a workpiece made of S 325 JRG or S355 JRG according to DIN EN 10025 and EN 10027 having a thickness 1.0 mm in the welding region was welded through using an ROFIN SINAR DL 028 Q laser diode provided by Rofin Sinar, Hamburg, Germany, as a source for one laser beam having a wave length of 960 nm (Nanometers) an intensity of 70 kW/cm² (Kilowatt per square centimetre) and a focus of 3.2 mm² (square millimetres). The above-identified protective gas was used. The laser source had a power of 2500 W (Watt). The feed of the workpiece was 2.2 m/min (metres per minute) whereas the feed of the protective gas was 15 1/min (litres per minute) at a pressure of XYZ bar and a temperature of XYZ °C. The result of this experiment was a workpiece having a welding seam which extended through the whole thickness of the workpiece in the welding region. The flank angle of the welding seam was approximately 0 ° so that the flanks were parallel with respect to each other.

According to a further improvement of the present invention the inert gas comprises at least in part nitrogen (N₂).

Nitrogen has proven to be advantageous if it is at least in part comprised in the protective gas. Nitrogen has very favourable properties as a welding gas and can be produced at low cost.

According to a further improvement of the present invention the protective gas comprises
- 42 % to 50 % nitrogen (N₂) and
- 43 % to 56 % argon (Ar).

The inert gas mixture disclosed above can advantageously be used as a protective gas together with 2 to 15% oxygen for laser welding parts made of metal.

According to a further aspect of the further invention a method for laser welding a workpiece made of metal is disclosed wherein at least one laser beam is used for welding.

The method according to the invention is characterized by the use of a protective gas according to the invention. The method according to the invention allows advantageously an effective heat distribution in the melt produced by the welding process, so that a heat conduction welding process with a width-to-depth-ratio of the welding seam of less than one is possible.

According to an improvement of the method according to the invention at least one laser diode is used as a source for the laser beam.

In particular laser diodes which can be purchased by ROFI SINAR, Hamburg, Germany, being specified as DL 028 Q have been found to be advantageous for use as a source for the laser beam according to the present invention.

According to a further improvement of the method according to the invention, the metal comprises steel.

It is understood that steel comprises in particular one of a non-alloyed steel and a low alloyed steel which can in particular be coated or non-coated. Within this document it is understood that a non-alloyed steel comprises less than 2.06 wt. % (weight %) carbon and other alloying elements only in amounts being conditional of manufacturing, such as in particular less than 0.5 wt. % silicon, less than 0.8 wt. % manganese, less than 0.09 wt. % phosphorus, and less than 0.06 wt. % sulphur. It is understood within this document that a low-alloyed steel is a steel in which the sum of all alloyed elements without carbon is less than 5 wt. %. It is understood within this document that a coated steel is a steel which comprises a boundary layer which differs in its physical and/or chemical properties from the remainder. It is understood within this document that a non-coated steel is a steel without such a boundary layer having substantially the same physical and/or chemical properties over its thickness.

The materials mentioned above can in a particularly advantageous way be welded by the method according to the present invention. In particular, the method according to the invention can be used to weld non-coated and non-alloyed steels, non-coated and low-alloyed steels, coated and non-alloyed steels, as well as coated and low-alloyed steels.

According to an improvement, the metal welded according to the inventive method according to the invention comprises 95 to 98 wt. % (weight %) iron.

According to a further improvement of the method according to the invention at least one laser beam having a wave length of 800 to 980 nm (nanometres) is used. It is particular advantageous that at least one laser source with a power of 500 to 6000 W (Watt), in particular 2000 to 3000 W, preferably 2500 W is used. Yet another advantageous improvement comprises the use of at least one laser beam having an intensity of 10to 1000 kW/cm² (Kilowatt per square centimetre), preferably 600 to 800 kW/cm², in particular 650 to 750 kW/cm².

According to yet another improvement of the method according to the present invention, at least one laser beam having a focus of at most 4 mm² (square millimetres) is used.

In particular a focus of 3.6 mm² or of less than 3 mm² or of 2 mm² and less was found to be advantageous.

According to another improvement of the method according to the present invention the welding process is performed at a feed rate of 1.0 to 3.0 m/min (metre per minute).

The method according to the invention can be carried out in particular when the protective gas is provided at a feed of 10 to 151/min (litre per minute).

According to a further improvement of the method according to the present invention the welding seam created by the welding process extends to a depth of up to 1 mm (millimetres). In particular the following parameters are adapted to achieve a depth of up to 1 mm: the power of the laser source, the focus, the feed rate, the material to be welded, properties of the protective gas, properties of the inert gas, and composition of the inert gas.

The invention is in the following further described by way of example with reference to the accompanying drawings in which
- Fig. 1: schematically shows a welding seam welded with a protective gas known from prior art and
- Fig. 2: schematically displays a welding seam welded according to the invention.

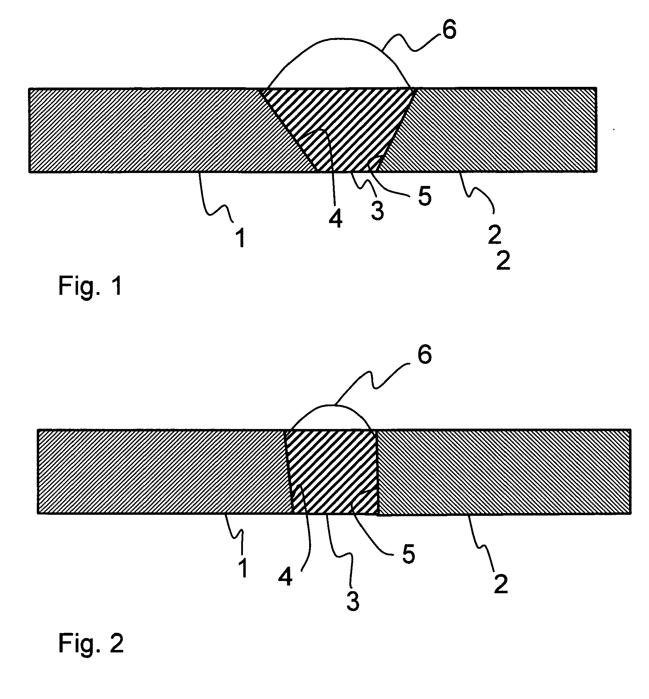

Both Figs. 1 and 2 display a cross section of a welding seam connecting a first workpiece 1 and a second workpiece 2 in a welded region 3. This welded region 3 is limited by a first border line 4 and a second border line 5. The flank angle 6 is the angle between the border lines 4, 5.

The example in Fig. 1 is welded using prior arts protective gases like e. g. pure Argon. The flank angle 6 is round about 50°. The example in Fig. 2 is welded using the inventive concept with a protective gas consisting of 86% argon and 14% oxygen. The flank angle 6 is nearly 0° which means that the flanks are basically parallel to each other. When laser-welding according to the present invention flank angles 6 of less than 25°, in particular less than 10°, or even less than 5° or 0° and width-to-depth ratios of the welded region 3 of less than one (1) can be achieved.

Furthermore a method for providing welding seam connections by laser welding using laser diodes as energy source , wherein said welding seam has a flank angle of less than 10°, preferably less than 5°, wherein a protective gas according to the present invention is used. The improvements described here for the method for laser welding can advantageously be transferred to and used with this method for providing welding seam connections as well.

The protective gas according to the present invention improves advantageously the transfer of energy into the welded region 3 so that small flank angles 6 can be achieved. The drawback of laser welding using at least one laser diode as energy source resulting in comparably small welding powers can such be overcome by using a protective gas according to the present invention.

### List of reference numerals

- 1: first workpiece
- 2: second workpiece
- 3: welded region
- 4: first border line
- 5: second border line
- 6: flank angle

## Claims

1. Protective gas for laser welding comprising the following components:
- 85 to 98 % of an inert gas and
- 2 to 15 % oxygen (O₂),
wherein the fractions of the inert gas and the oxygen sum up to at least 99.9 % the remainder being impurities.

2. Protective gas according to claim 1, comprising the following components:
- 91 % to 93 % of the inert gas and
- 7 % to 9 % oxygen (O₂).

3. Protective gas according to claim 1 or 2, wherein the inert gas comprises at least in part nitrogen (N₂).

4. Protective gas according to claim 3, wherein the protective gas comprises
- 42 % to 50 % nitrogen (N₂) and
- 44 % to 46 % of at least one of the following gases
- argon and
- helium.

5. Method for laser welding a work piece made of metal, wherein at least one laser beam is used for welding, **characterized in that** a protective gas according to one of the preceding claims is used.

6. Method according to claim 5, wherein at least one laser diode is used as a source for the laser beam.

7. Method according to claim 5 or 6, wherein the metal comprises steel.

8. Method according to one of claims 5 to 7, wherein at least one laser beam having a wave length of 800 to 980 nm (nanometres) is used.

9. Method according to one of claims 5 to 8, wherein at lea0st one laser source having a power of 500 W (Watt) to 6000 W is used.

10. Method according to one of claims 5 to 9, wherein at least one laser beam having an intensity of 10 to 1000 W/cm² (Kilowatt per square centimetre) is used.

11. Method according to one of claims 5 to 10, wherein at least one laser beam having a focus of at most 4 mm² (square millimetres) is used.

12. Method according to one of claims 5 to 11, wherein the welding process is performed at a feed rate of 1.0 to 3.0 m/min (metre per minute).

13. Method according to one of claims 5 to 12, wherein the protective gas is provided at a feed of 10 to 151/min (litre per minute).

14. Method according to one of claims 5 to 13, wherein the welding seam created by the welding process extends into a depth of up to 1 mm (millimetres).
